(19) Europäisches Patentamt
European Patent Office
Office européen des brevets

(11) EP 0 849 607 B1

(12) **FASCICULE DE BREVET EUROPEEN**

(45) Date de publication et mention de la délivrance du brevet:
**28.08.2002 Bulletin 2002/35**

(51) Int Cl.$^7$: **G01S 13/34**, G01S 13/93

(21) Numéro de dépôt: **97403091.8**

(22) Date de dépôt: **19.12.1997**

(54) **Radar de détection d'obstacles notamment pour véhicules automobiles**

Hindernis-Entdeckungsradar, insbesondere für Fahrzeuge

Obstacle detection radar, particularly for automotive vehicles

(84) Etats contractants désignés:
**BE DE ES FR GB IT**

(30) Priorité: **20.12.1996 FR 9615740**

(43) Date de publication de la demande:
**24.06.1998 Bulletin 1998/26**

(73) Titulaire: **Thales**
**75008 Paris (FR)**

(72) Inventeurs:
- **Artis, Jean-Paul**
**94117 Arcueil Cedex (FR)**
- **Cornic Pascal**
**94117 Arcueil Cedex (FR)**

(56) Documents cités:
**WO-A-95/04943**
**GB-A- 2 249 448**
**US-A- 5 285 207**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un radar de détection d'obstacles. Elle s'applique notamment aux véhicules automobiles pour détecter les obstacles, plus particulièrement les véhicules les précédant.

Les radars destinés à des applications pour le grand public doivent être vendus à des prix les plus faibles possibles tout en respectant les performances techniques nécessaires à la fiabilité ou à la sécurité. C'est le cas notamment des radars de mesures de niveau, des radars de gestion du trafic routier et plus spécifiquement des radars pour automobiles utilisés pour les fonctions de régulation de vitesse ou de détection d'obstacles. Un radar de régulation de vitesse pour véhicule automobile a pour fonction notamment de détecter la distance et la vitesse entre un véhicule porteur et le véhicule le précédant, cela pour permettre au véhicule porteur de régler sa vitesse par rapport à celle du véhicule précédent, pour répondre par exemple à des critères de sécurité. Un tel radar doit notamment être opérationnel quelles que soient les conditions atmosphériques.

Une solution connue pour mesurer la distance d'un obstacle par radar, est d'exploiter la rotation de phase du signal émis par le radar pendant son trajet aller-retour du radar à l'obstacle. Le signal émis $e(t)$ étant défini par la relation suivante :

$$e(t) = A\cos(2\pi Ft) \quad (1)$$

où

F représente la fréquence du signal radar
t représente le temps
A représente l'amplitude du signal radar

La rotation de phase $\varphi$, ou déphasage, obtenue sur ce signal après propagation sur une distance 2D correspondant au trajet aller-retour entre le radar et l'obstacle est définie par la relation suivante :

$$\varphi = 2\pi F\tau \quad (2)$$

où $\tau$ représente le temps mis par l'onde radar pour parcourir la distance aller-retour 2D. En fait :

$$\tau = \frac{2D}{c} \quad (3)$$

où c représente la vitesse de la lumière

Des relations (2) et (3), il s'ensuit que

$$D = \frac{c\varphi}{4\pi F} \quad (4)$$

La relation (4) montre qu'une simple mesure de phase permet d'accéder à la mesure de la distance D entre le radar et l'obstacle. Cependant, en pratique la mesure est ambiguë dès que le déphasage $\varphi$ est supérieur à $2\pi$, si le récepteur comprend deux voies de réception en quadrature, ou à $\pi$ s'il ne comprend qu'une seule voie de réception. Cela interdit une mesure directe de la distance à partir de la phase dans une utilisation radar où la fréquence est couramment supérieure à 1 GHz. Une solution habituellement mise en oeuvre consiste alors à utiliser une mesure de phase différentielle correspondant à des signaux radars émis et reçus sur deux fréquences différentes $F_1$ et $F_2$.

Une séquence d'émission à une première fréquence $F_1$ donne accès à un premier déphasage $\varphi_1$:

$$\varphi_1 = \frac{4\pi D}{c}F_1 \quad (5)$$

De même, une séquence d'émission à une deuxième fréquence $F_2$ donne accès à un deuxième déphasage $\varphi_2$ :

$$\varphi_2 = \frac{4\pi D}{c} F_2 \qquad (6)$$

Des relations (5) et (6), la mesure de la distance D est déduite :

$$D = \frac{c}{4\pi}\left(\frac{\varphi_2 - \varphi_1}{F_2 - F_1}\right) \qquad (7)$$

En posant :

$$\varphi_2 - \varphi_1 = \Delta\varphi$$

et

$$F_1 - F_2 = \Delta F$$

Il vient :

$$D = \frac{c\Delta\varphi}{4\pi\Delta F} \qquad (8)$$

Pour des raisons de coût, les dispositifs radar utilisés dans des applications civiles et notamment dans les applications automobiles reposent souvent sur des solutions homodynes du point de vue de l'émetteur et du récepteur, et sur des solutions monostatiques du point de vue de l'antenne.

Cependant, ce type de dispositif présente une limite importante, liée notamment à la présence de différents bruits de puissance bien supérieure à la puissance du bruit thermique, en particulier dans la partie basse du spectre du signal vidéo en sortie du mélangeur. Ces bruits sont liés au bruit d'amplitude de l'oscillateur et des fuites qui en résultent par désadaptation de l'ensemble circulateur-antenne, au bruit propre du mélangeur, aux variations du taux d'onde stationnaire (TOS) apparent de l'antenne en présence de vibrations mécaniques, à la présence du clutter de pluie ou encore de projections d'eau sur l'antenne du radar. En pratique, les bruits liés aux composants hyperfréquence sont plus importants lorsque le radar fonctionne en ondes millimétriques, ce qui est notamment le cas des radars automobiles fonctionnant à 76 GHz. En pratique, le bruit d'amplitude des oscillateurs de type gunn ou des transistors utilisés pour la fonction oscillateur, et le bruit des diodes utilisées pour la fonction mélangeur perturbent sensiblement, voire rendent impossible l'estimation de la phase du signal reçu, lorsque la fréquence du signal de réception démodulé est faible.

Dans le cas particulier d'un radar de régulation de vitesse de véhicules automobiles, il est important que la qualité de la mesure de phase soit préservée lorsque la vitesse radiale de la cible détectée par le radar est proche de zéro. La cible détectée étant en fait le véhicule précédent le véhicule porteur, une vitesse radiale proche de zéro correspond au régime de régulation. La fréquence doppler de l'écho radar est alors proche de zéro, et l'estimation de la distance s'effectue à partir d'une mesure de phase particulièrement bruitée.

Le but de l'invention est notamment de pallier cet inconvénient malgré les limites techniques imposées par le choix du principe radar homodyne.

A cet effet, l'invention a pour objet un radar de détection d'une cible, caractérisé en ce qu'il utilise au moins quatre fréquences notées $F_1$, $F_2$, $F_3$, $F_4$ telles que :

$$F_1 - F_3 = F_2 - F_4$$

et que :

$$(F_1 + F_3) - (F_2 + F_4) = Cte,$$

où Cte représente une valeur de fréquence constante, la mesure de distance de la cible s'effectuant à partir de

la différence de phase entre deux signaux constitués pour le premier de la différence de deux signaux reçus correspondant respectivement aux fréquences $F_1$ et $F_3$, et pour le second de la différence de deux signaux reçus correspondant respectivement aux fréquences $F_2$ et $F_4$.

L'invention a pour principaux avantages qu'elle s'adapte à plusieurs types de radars, qu'elle est simple à mettre en oeuvre et qu'elle est économique.

D'autres caractéristiques et avantages de l'invention apparaîtront à l'aide de la description qui suit faite en regard de dessins annexés qui représentent :

- la figure 1, un exemple de réalisation d'un radar selon l'art antérieur, utilisé dans des applications civiles, notamment automobiles.
- la figure 2, un exemple de chronogrammes d'émission/réception d'un radar bifréquence.
- la figure 3, un exemple de chronogrammes d'émission/réception d'un radar selon l'invention.
- la figure 4, un synoptique d'un mode de réalisation possible d'un radar selon l'invention, associé par exemple à une antenne de type monopulse.

La figure 1 présente par un synoptique un exemple de réalisation d'un radar selon l'art antérieur utilisé dans des applications civiles et notamment dans les applications automobiles. Dans ce type de radar, la séparation des cibles et la mesure des vitesses sont effectuées par filtrage des fréquences Doppler, et la mesure de distance est obtenue par mesure de phase après traitement Doppler. Ce type de radar à mesure de phase, repose généralement sur des solutions homodynes du point de vue de l'émetteur et du récepteur et sur des solutions monostatiques du point de vue de l'antenne. Il comporte par exemple des moyens 1 de commande de modulation d'un oscillateur hyperfréquence 2, fonctionnant notamment à 76 GHz dans le domaine des applications automobiles. Les moyens de commande 1 modulent par exemple la fréquence émise par l'oscillateur selon deux fréquences $F_1$, $F_2$. La fréquence émise par l'oscillateur 2 est dirigée vers une antenne 3 via un circulateur 4 et des moyens d'amplification non représentés. Les signaux reçus par l'antenne 3 sont transmis à un mélangeur 5 via le circulateur 4 pour être démodulés par les signaux fournis par l'oscillateur 2. Ces signaux sont modulés/démodulés séquentiellement à une première fréquence $F_1$ puis à une deuxième fréquence $F_2$. Le signal vidéo obtenu en sortie du mélangeur 5 est envoyé vers le récepteur du radar.

La figure 2 présente un exemple de chronogrammes d'émission 21 et de réception 22 des signaux modulés à ces deux fréquences $F_1$, $F_2$. Comme le montrent les relations (4) à (8) précédentes, ces dernières permettent de lever l'ambiguïté en distance par une mesure non ambiguë entre D = 0 et $D = \frac{C}{4\Delta F}$. Selon la figure 2, une première émission est réalisée à la première fréquence de modulation $F_1$, puis est suivie d'un temps mort ou d'une émission à une certaine fréquence non utilisée par le radar. Commence ensuite une deuxième émission à la deuxième fréquence de modulation $F_2$ suivie d'un temps mort, puis une émission à la première fréquence $F_1$ recommence alors, et ainsi de suite, de façon séquentielle. Les phases de réception se produisent en même temps que les phases d'émission aux mêmes fréquences de modulation. Comme il a été exposé précédemment, un type de radar fonctionnant selon les figures 1 et 2 présente une limite importante liée à la présence de différents bruits de puissance bien supérieure à la puissance du bruit thermique, en particulier dans la partie basse du spectre du signal vidéo en sortie du mélangeur 5. Ces bruits sont liés au bruit d'amplitude de l'oscillateur 2 et des fuites qui en résultent par désadaptation de l'ensemble constitué du circulateur 4 et de l'antenne 3. Ils sont encore par exemple dus au bruit propre du mélangeur 5, au TOS apparent de l'antenne 3 en présence de vibrations mécaniques, à la présence de clutter de pluie ou de projection d'eau sur l'antenne. Dans le domaine des ondes millimétriques, notamment à la fréquence de 76 GHz pour les applications automobiles, les bruits liés aux composants hyperfréquences ont beaucoup d'importance. En particulier, le bruit d'amplitude des oscillateurs de type gunn ou des transistors utilisés par l'oscillateur 2, ainsi que par exemple le bruit en 1/F des diodes schottky utilisées par le mélangeur 5, perturbent voire empêchent l'estimation de la phase du signal reçu lorsque la fréquence du signal de réception démodulé est faible. Ce dernier cas correspond en fait au cas où la vitesse radiale de la cible détectée par le radar est proche de zéro. Dans une application d'un radar de régulation de vitesse de véhicule automobile, cela correspond donc au régime de régulation, celui où la distance de sécurité entre chaque véhicule est préservée et que ces derniers roulent sensiblement à la même vitesse.

Pour permettre une mesure de qualité de la phase, notamment dans ce dernier cas, le principe de fonctionnement du radar selon l'invention repose sur l'émission et la réception d'ondes sinusoïdales sur au moins deux couples de fréquences notés par la suite respectivement $(F_1,F_2)$ et $(F_3,F_4)$.

Le premier couple est constitué d'une première fréquence $F_1$ et d'une deuxième fréquence $F_2$, le deuxième couple est constitué d'une troisième fréquence $F_3$ et d'une quatrième fréquence $F_4$. Ces quatre fréquences répondent aux relations suivantes :

$$F_1 - F_3 = F_2 - F_4 = \Delta F \qquad (A)$$

$$\left(\frac{F_1 + F_3}{2}\right) - \left(\frac{F_2 + F_4}{2}\right) = \Delta F' \qquad (B)$$

Le choix des fréquences différentielles ΔF et ΔF' répondent à certaines contraintes exposées par la suite.
La figure 3 montre un exemple de chronogramme d'émission 31 et de réception 32, 33, 34, 35 à ces quatre fréquences $F_1$, $F_2$, $F_3$, $F_4$, dans le cas particulier d'un radar pour automobile adapté à une portée d'environ 150 m.
Les fréquences d'émission se suivent séquentiellement par exemple comme indiqué ci-après. L'émission à la première fréquence $F_1$ est suivie de l'émission à la troisième fréquence $F_3$ qui est suivie de l'émission à la deuxième fréquence $F_2$, suivie elle-même de l'émission à la quatrième fréquence $F_4$, puis recommence alors une nouvelle émission à la première fréquence $F_1$. La durée d'émission de chaque phase est par exemple égale à 2,5 µs. Les valeurs des fréquences $F_1$, $F_2$, $F_3$, $F_4$ sont par exemple les suivantes :

$$F_1 = 76 \text{ GHz}$$

sensiblement ;

$$F_2 = F_1 + \Delta F', \text{ avec } \Delta F' = 230 \text{ kHz ;}$$

$$F_3 = F_1 + \Delta F, \text{ avec } \Delta F = 750 \text{ kHz ;}$$

$$F_4 = F_2 + \Delta F = F_1 + \Delta F + \Delta F'.$$

$F_1$, ΔF et ΔF' étant fixées, les valeurs des quatre fréquences $F_1$, $F_2$, $F_3$, $F_4$ se déduisent des relations (A) et (B) précédentes.
La figure 4, illustre par un synoptique un mode de réalisation possible d'un radar selon l'invention.
Il comporte par exemple des moyens 41 de commande de modulation d'un oscillateur hyperfréquence 42. La sortie de cet oscillateur est reliée à l'entrée d'un circulateur 43 via un coupleur 44. L'oscillateur 42 fournit par exemple des signaux hyperfréquence aux fréquences $F_1$, $F_2$, $F_3$, $F_4$ telles que définies relativement à la figure 3. Une première sortie du circulateur 43, destinée à l'émission, est par exemple reliée à un té magique 45 lequel est par exemple relié à une antenne de type monopulse 46. Une telle antenne comprend une voie somme Σ et une voie différence Δ. Pour la réception, la voie somme Σ est par exemple reliée en entrée à la première sortie précitée du circulateur 43 via le té magique 45. Le signal reçu sur la voie somme est dirigé sur une deuxième sortie du circulateur 43 reliée à une première entrée d'un premier mélangeur 47, l'autre sortie de ce mélangeur étant reliée à la sortie de l'oscillateur hyperfréquence via le coupleur 44. Le signal reçu sur la voie différence Δ est dirigé via le té magique 45 sur la première entrée d'un deuxième mélangeur 48, l'autre entrée de ce mélangeur étant reliée à la sortie de l'oscillateur hyperfréquence 42 via le coupleur 44.
Le radar émet et reçoit par exemple successivement sur les quatre fréquences $F_1$, $F_2$, $F_3$, $F_4$ tel qu'illustré par la figure 3. La réception s'effectue pendant la durée d'un créneau d'émission. Le signal reçu sur chaque fréquence est par exemple démodulé de façon homodyne au moyen des mélangeurs 47, 48, par rapport à l'oscillateur utilisé pour l'émission à la même fréquence, ce qui produit un signal vidéo dont la fréquence correspond à la fréquence Doppler de la cible radar et dont la phase est déterminée par la distance entre le radar et la cible. Ainsi après démodulation, le signal reçu d'une cible donnée est obtenu selon la relation suivante :

$$x_i(t) = \cos\left(2\pi \ Fd \ t - \frac{4\pi}{c} F_i D\right) \qquad (9)$$

où

- i est l'indice correspondant à la fréquence utilisé Fi, par exemple i est égal successivement à 1, 2, 3 et 4, et Fi égales aux fréquences $F_1$, $F_2$, $F_3$, $F_4$ précédemment définies,

- Fd est la fréquence Doppler de la cible,
- D est la distance entre le radar et la cible,
- t représente le temps,
- c représente la vitesse de la lumière.

Dans le cas d'une application à un radar de régulation de vitesse automobile, où l'antenne utilisée est par exemple de type monopulse, la détection au moyen du signal $x_i(t)$ s'effectue sur la voie somme Σ.

Ce signal $x_i(t)$ est entâché d'un bruit additif bi(t) résultant des différents phénomènes perturbateurs cités précédemment, tels que par exemple le bruit en 1/F de l'émetteur-récepteur, les vibrations d'antenne ou le clutter. En sortie d'un mélangeur 47, 48, le signal $r_i(t)$ suivant est ainsi obtenu, correspondant à la ième fréquence $F_i$ :

$$r_i(t) = x_i(t)+b_i(t) \qquad (10)$$

Selon l'invention, les moyens de traitement radar amplifient puis démultiplexent et échantillonnent les signaux reçus sur les différentes fréquences, de façon à former les signaux différence suivants :

$$r_1(t) - r_3(t)$$

et

$$r_2(t) - r_4(t)$$

Pour réaliser les opérations précédentes, un premier amplificateur 50, est par exemple relié en sortie du premier mélangeur 47, destiné à la voie somme Σ. L'entrée positive d'un premier élément soustracteur 51, à base par exemple d'amplificateur différentiel, est par exemple relié à la sortie du premier amplificateur 50 via un interrupteur 52 commandé à la fermeture durant la phase d'émission-réception à la première fréquence $F_1$. L'entrée négative du premier élément soustracteur 51 est reliée à la sortie du premier amplificateur 50 via un interrupteur 53 commandé à la fermeture pendant la phase d'émission-réception à la troisième fréquence $F_3$. L'élément soustracteur 51 réalise la différence entre son entrée positive et son entrée négative. Il réalise par exemple par ailleurs le blocage sur une période des signaux reçus à fréquence $F_1$, puis à fréquence $F_3$, au moyen par exemple de bloqueurs non représentés câblés entre ses entrées et les interrupteurs, afin de pouvoir réaliser le signal différence $r_1(t) - r_3(t)$. Ce signal est ensuite par exemple converti numériquement au moyen d'un convertisseur analogique-numérique 54 dont une entrée est reliée à la sortie du premier élément soustracteur 51. De façon analogue, un deuxième élément soustracteur 55 fournit le signal différence $r_2(t) - r_4(t)$ au convertisseur analogique numérique 54. A cet effet, son entrée positive et son entrée négative sont reliées respectivement à la sortie du premier amplificateur via un interrupteur 56 commandé à la fermeture pendant la phase d'émission-réception à la deuxième fréquence $F_2$ et via un interrupteur 57 commandé à la fermeture pendant la phase d'émission-réception à la quatrième fréquence $F_4$. Les moyens de commande des interrupteurs, synchronisés sur ceux de l'oscillateur hyperfréquence 42 ne sont pas représentés. Le convertisseur analogique numérique a par exemple aussi pour fonction d'effectuer l'échantillonnage des signaux différences. Il est par exemple à cet effet, commandé par un signal d'échantillonnage généré par des moyens non représentés.

Les signaux différence $r_1(t) - r_3(t)$ et $r_2(t) - r_4(t)$ sont ensuite filtrés dans une batterie de filtres Doppler à haute résolution, pour séparer notamment les cibles par leur vitesse, avant détection. Cette batterie de filtres Doppler est par exemple réalisée par des moyens 49 de réalisation d'une transformée de Fourier rapide (FFT). A cet effet, le convertisseur analogique-numérique fournit les données numérisées aux moyens 49 de transformation de Fourier rapide.

Une autre solution peut par exemple consister à former les signaux différence $r_1(t) - r_3(t)$ et $r_2(t) - r_4(t)$ en sortie des moyens 49 de calcul de transformée de Fourier rapide puisque cette dernière est une opération linéaire. Dans les deux cas, la détection du signal utile s'effectue par détection des maxima et comparaison à un seuil des modules des densités spectrales de puissances formées à partir des signaux différences.

Les modules densités spectrales de puissances formées à partir des signaux différences $r_1(t) - r_3(t)$ et $r_2(t) - r_4(t)$ sont notés respectivement $|\vec{S}_{r_1-r_3}|$ et $|\vec{S}_{r_2-r_4}|$, les spectres correspondant en sortie de calcul de transformée de Fourier rapide FFT étant notés respectivement $\vec{S}_{r1-r3}$ et $\vec{S}_{r2-r4}$.

La mesure de $V_r$ de la vitesse de la cible détectée dans le filtre d'ordre k est donnée par la relation suivante :

$$V_r = \frac{\lambda F_d}{2} = \frac{\lambda}{2}\frac{k}{N} F_e \qquad (11)$$

où

- k est le numéro du filtre où s'effectue la détection,
- λ est la longueur d'onde du radar,
- N est le nombre de points total de la transformée de Fourier rapide FFT,
- $F_e$ est la fréquence d'échantillonnage du signal,
- $F_d$ est la fréquence Doppler correspondant à la cible.

La mesure de la distance d'une cible détection dans le filtre d'ordre k est obtenue par le calcul de la différence de phase :

$$\varphi\left(\vec{S}_{r_1-r_3}\right) - \varphi\left(\vec{S}_{r_2-r_4}\right)$$

$$\varphi\left(\vec{S}_{r_1-r_3}\right)$$

étant le déphasage sur le spectre $\vec{S}_{r1-r3}$, et

$$\varphi\left(\vec{S}_{r_2-r_4}\right)$$

étant le déphasage sur le spectre $\vec{S}_{r2-r4}$, $\vec{S}_{r1-r3}$ et $\vec{S}_{r2-r4}$ ayant été définis précédemment. La différence de phase

$$\varphi\left(\vec{S}_{r_1-r_3}\right) - \varphi\left(\vec{S}_{r_2-r_4}\right)$$

correspond en fait à la différence de phase entre les signaux différence $r_1(t)$-$r_3(t)$ et $r_2(t)$-$r_4(t)$. Tout autre méthode que le passage par une transformée de Fourier peut être utilisée pour déterminer ce déphasage. En fait, selon l'invention, la mesure de distance de la cible s'effectue à partir de la différence de phase entre les deux signaux constitués respectivement par les différences $r_1(t)$-$r_3(t)$ et $r_2(t)$-$r_4(t)$ de deux signaux reçus $r_1(t)$,$r_3(t)$ et $r_2(t)$,$r_4(t)$ correspondant respectivement par exemple aux première et troisième fréquence d'émission d'une part, et aux deuxième et quatrième fréquence d'émission d'autre part.

Ce résultat peut se déduire, selon des étapes successives, de la relation (9) précédente. En absence de bruit, il vient :

$$r_1(t) - r_3(t) = x_1(t) - x_3(t) = \cos\left(2\pi\ Fd\ t - \frac{4\pi}{c}F_1 D\right) - \cos\left(2\pi Fdt - \frac{4\pi}{c}F_3 D\right)$$

$$= \left[\cos\left(\frac{4\pi F_1}{c}D\right) - \cos\left(\frac{4\pi F_3}{c}D\right)\right]\cos 2\pi Fdt + \left[\sin\left(\frac{4\pi F_1}{c}D\right) - \sin\left(\frac{4\pi F_3}{c}D\right)\right]\sin 2\pi Fdt$$

ce qui s'écrit encore :

$$x_1(t) - x_3(t) = -2\sin\left(2\pi\ Fd\ t - \frac{4\pi}{c} F_0\ D\right)\sin\left(\frac{2\pi}{c}\ \Delta F\ D\right) \quad (12)$$

en notant $F_1 = F_0 - \frac{\Delta F}{2}$ et $F_3 = F_0 + \frac{\Delta F}{2}$, $\Delta F$ ayant été définie précédemment.

Il vient :

$$\varphi\left(\vec{S}_{x_1 - x_3}\right) = \frac{2\pi}{c}\left(F_1 + F_3\right)D - \frac{\pi}{2} \quad (13)$$

de la même façon, la relation suivante est obtenue :

$$\varphi\left(\vec{S}_{x_2 - x_4}\right) = \frac{2\pi}{c}\left(F_2 + F_4\right)D - \frac{\pi}{2} \quad (14)$$

et:

$$\varphi\left(\vec{S}_{x_1 - x_3}\right) - \varphi\left(\vec{S}_{x_2 - x_4}\right) = \frac{4\pi}{c} D\Delta F' \quad (15)$$

$\Delta F'$ ayant été définie précédemment.
soit :

$$\text{la distance } D = \frac{c}{4\pi\Delta F'}\left[\varphi\left(\vec{S}_{x_1 - x_3}\right) - \varphi\left(\vec{S}_{x_2 - x_4}\right)\right] \quad (16)$$

L'estimation de différence de la phase :

$$\varphi\left(\vec{S}_{x_1 - x_3}\right) - \varphi\left(\vec{S}_{x_2 - x_4}\right)$$

peut être faite de deux façons différentes :

$$\varphi\left(\vec{S}_{x_1 - x_3}\right) - \varphi\left(\vec{S}_{x_2 - x_4}\right) = \arctan\left[\frac{\operatorname{Im}\left(\vec{S}_{x_1 - x_3}\right)}{R\left(\vec{S}_{x_1 - x_3}\right)}\right] - \arctan\left[\frac{\operatorname{Im}\left(\vec{S}_{x_2 - x_4}\right)}{R\left(\vec{S}_{x_2 - x_4}\right)}\right] \quad (17)$$

Im et R représentent respectivement la partie imaginaire et la partie réelle ou :

$$\varphi\left(\vec{S}_{x_1 - x_3}\right) - \varphi\left(\vec{S}_{x_2 - x_4}\right) = 2\arctan\frac{\left\|\vec{S}_{x_1 - x_3} - \vec{S}_{x_2 - x4}\right\|}{\left\|\vec{S}_{x_1 - x_3} + \vec{S}_{x_2 - x_4}\right\|} \quad (18)$$

En présence de "bruit" au sens large, cette façon de procéder selon l'invention pour estimer la distance de la cible permet notamment d'éliminer ou d'atténuer fortement les bruits d'origine hyperfréquence, dont la densité spectrale de puissance est décroissante à partir de la fréquence zéro, et dont les fluctuations sont lentes.

En effet ces bruits apparaissent corrélés sur les canaux de réception correspondant aux fréquences F1 et F3 d'une part, et F2 et F4 d'autre part, si bien que par soustraction, ces bruits sont atténués très fortement. En conséquence:

$$r_1(t)-r_3(t) \sim x_1(t)-x_3(t)$$

Le signal différence $r_1(t)$-$r_3(t)$ est donc sensiblement égal au signal différence $x_1(t)$-$x_3(t)$

De la même façon :

$$r_2(t)-r_4(t) \sim x_2(t)-x_4(t)$$

Le signal différence $r_2(t)$-$r_4(t)$ est donc sensiblement égal au signal différence $x_2(t)$- $x_4(t)$.

L'estimation de différence phase, obtenue en pratique, à partir des signaux différence $r_1(t)$-$r_3(t)$ et $r_2(t)$-$r_4(t)$ est donc elle-même exempte de bruit.

Le dispositif selon l'invention permet par ailleurs d'atténuer les phénomènes parasites tels que le clutter de pluie, les modulations du taux d'onde stationnaire (TOS) de l'antenne liées au vibrations, qui apparaissent à des distances voisines de zéro par rapport au récepteur radar. En effet, les signaux différence $r_1(t)$-$r_3(t)$ et $r_2(t)$-$r_4(t)$ suivent une loi de sensibilité en fonction de la distance D qui est la suivante :

$$2\sin\left(\frac{2\pi}{c}\,\Delta F\,\dot{D}\right)$$

et dont l'effet est analogue à l'effet obtenu dans un radar à modulation de trains d'impulsions par un filtre simple annulation, atténuant la sensibilité aux fréquences Doppler basses. L'extraction de la différence de phase, donc de distance, s'en trouve encore améliorée.

En ce qui concerne le choix des différences de fréquences $\Delta F$ et $\Delta F'$, il résulte par exemple selon l'invention, notamment du compromis suivant :

- la différence de fréquence $\Delta F = F_1 - F_3 = F_2 - F_4$ doit par exemple permettre une forte atténuation des signaux reçus dans les premiers mètres, sans créer de trous dans la portée du radar, et tout en assurant une sensibilité maximum sur les cibles en limite de portée. Dans l'application au radar automobile où la portée est par exemple de l'ordre de 150 m, la différence de fréquence peut être prise égale à environ 750 kHz.
- la différence de fréquence $\Delta F' = \frac{(F_1 + F_3)}{2} - \frac{(F_2 + F_4)}{2}$ ne doit pas générer d'ambiguïtés dans la mesure de la différence de phase

$$\varphi\left(\bar{S}_{x_1-x_3}\right) - \varphi\left(\bar{S}_{x_2-x_4}\right),$$

d'après la relation (15), il s'ensuit que :

$$\frac{4\pi}{c}\,D\,\Delta F'$$

est inférieur à $\pi$

Dans une application automobile, où il est par exemple envisagé de rejeter les distances ambiguës au delà de 300 m, la différence de fréquence $\Delta F'$ peut par exemple être choisie inférieure à 250 kHz. D'autre part, cette différence $\Delta F'$ doit être aussi grande que possible pour ajuster la dynamique de la phase mesurée à la portée du radar. Si la portée du radar est de 150 m, la différence de fréquence $\Delta F'$ peut être choisie par exemple égale à 250 kHz, ce qui conduit notamment à une phase maximum égale à $\pi$ pour la portée maximum.

Ces valeurs peuvent être par exemple appliquées par les moyens de commande de modulation du radar tel que décrit par le synoptique de la figure 4. Dans cet exemple de réalisation de radar monopulse à saut de fréquence pour automobiles, la détection s'effectue sur la voie somme Σ du récepteur monopulse à partir des signaux différences $\Sigma r_1 - r_3$ correspondant aux fréquences F1 et F3 d'une part et $\Sigma r_2\text{-}r_4$ correspondant aux fréquences F2 et F4 d'autre part, au moyen notamment des éléments décrits précédemment. Les moyens 49 de calcul de transformée de Fourier délivrant les spectres $\vec{S}_{\Sigma r1\text{-}r3}$ et $\vec{S}_{\Sigma r2\text{-}r4}$ relatifs respectivement aux signaux $\Sigma_{r1\text{-}r3}$ et $\Sigma_{r2\text{-}r4}$, la mesure de distance est effectuée en calculant la différence de phase :

$$\varphi\left(\vec{S}_{\Sigma_{r_1-r_3}}\right)-\varphi\left(\vec{S}_{\Sigma_{r_2-r_4}}\right)$$

selon par exemple la relation (18).

Ce calcul est par exemple effectué par un calculateur non représenté relié en sortie des moyens 49 de calcul de transformée de Fourier rapide ou encore englobant ces derniers.

La mesure d'écartométrie angulaire est par exemple obtenue en calculant le rapport des déphasages :

$$\frac{\left|\vec{S}_{\Delta r_1\text{-}r_3}\right|}{\left|\vec{S}_{\Sigma r_1\text{-}r_3}\right|}$$

où $\left|\vec{S}_{\Delta r_1\text{-}r_3}\right|$ et $\left|\vec{S}_{\Sigma r_1\text{-}r_3}\right|$ représentent les densités spectrales respectivement du signal différence $\Delta_{r1\text{-}r3}$ sur la voie différence Δ et du signal différence $\Sigma_{r1\text{-}r3}$ sur la voie somme Σ correspondant aux fréquences $F_1$ et $F_3$.

Pour obtenir le signal différence $\Delta_{r1\text{-}r3}$ sur la voie différence Δ, un troisième élément soustracteur 58 est par exemple utilisé sur la voie de réception différence Δ. L'entrée positive de ce dernier est reliée à la sortie d'un deuxième amplificateur 59 via un interrupteur 60 commandé à la fermeture durant la phase de fréquence d'émission-réception correspondant à la première fréquence $F_1$. L'entrée négative est reliée à ce deuxième amplificateur 59 via un interrupteur 61 commandé à la fermeture pendant la phase d'émission-réception correspondant à la troisième fréquence $F_3$. L'entrée du deuxième amplificateur 59 est par exemple reliée à la sortie du mélangeur 48 de la voie différence Δ. Le troisième élément soustracteur 58 fournit le signal différence $\Delta_{r1\text{-}r3}$ au convertisseur analogique-numérique 54. Le signal numérisé est ensuite fourni aux moyens 49 de calcul de transformée de Fourier rapide FFT qui délivre le spectre $\vec{S}_{\Delta r1\text{-}r3}$. Le rapport

$$\frac{\left|\vec{S}_{\Sigma r_1\text{-}r_3}\right|}{\left|\vec{S}_{\Delta r_1\text{-}r_3}\right|}$$

est par exemple calculé par les moyens de calcul précités et non représentés sur la figure 4. Un autre mode de réalisation possible consiste par exemple à échantillonner et à coder les signaux directement à la sortie des amplificateurs 50, 59 suivant les mélangeurs 47, 48. Au lieu que le démultiplexage soit effectué par les interrupteurs 52, 53, 56, 57, 60, 61, il est alors effectué numériquement par un calculateur, le même par exemple que celui qui réalise le calcul des transformées de Fourier rapide puis les calculs de distance et d'écartométrie. Un tel calculateur, à base de microprocesseurs de traitement du signal est bien connu de l'homme du métier.

Le principe de fonctionnement selon l'invention s'applique à un radar automobile à saut de fréquence destiné notamment à la régulation de vitesse ou à la détection d'obstacles. Il peut aussi être appliqué à d'autres types de radar, monopulse ou non, pourvu qu'il possède suffisamment de voies de réception pour réaliser les signaux différence $r_1(t)$-$r_3(t)$ et $r_2(t)$-$r_4(t)$ décrits précédemment. Le principe de détection selon l'invention s'applique aussi par exemple à un radar à onde continue à rampe de fréquence.

Un radar selon l'invention permet d'améliorer la qualité de l'estimation de la distance réalisée par mesure de différences de phases, dans un radar à ondes continues, notamment en présence de bruit temporellement corrélé, ou plus généralement en présence de clutter, ou à distance proche. Sa mise en oeuvre est simple et n'entraîne pas de surcoût sensible par rapport à un radar classique.

Dans une réalisation de type radar automobile homodyne à saut de fréquence fonctionnant en ondes millimétriques, à 76 GHz notamment, où la réception est particulièrement sensible aux perturbations basse fréquence, les seules évolutions matérielles à mettre en oeuvre concernent le circuit de commande de l'oscillateur hyperfréquence 42 et les circuits de démultiplexages anologiques 52, 53, 56, 57, 60, 61, 51, 55, 58 du récepteur.

Enfin, le choix des différences de fréquences $\Delta F$ et $\Delta F'$ définies précédemment permet d'ajuster et de diminuer la dynamique du récepteur en fonction de la portée visée. Dans l'exemple de radar automobile ayant une portée d'environ 150 m, la dynamique du récepteur peut être réduite de 15 dB environ.

## Revendications

1. Radar de détection d'une cible, **caractérisé en ce qu'**il utilise au moins quatre fréquences notées $F_1$, $F_2$, $F_3$, $F_4$ telles que :

$$F_1 - F_3 = F_2 - F_4$$

et

$$(F_1 + F_3) - (F_2 + F_4) = Cte,$$

où Cte représente une valeur de fréquence constante,
la mesure de distance de la cible s'effectuant à partir de la différence de phase entre deux signaux constitués pour le premier ($r_1(t)$-$r_3(t)$) de la différence de deux signaux reçus correspondant respectivement aux fréquences $F_1$ et $F_3$, et pour le second ($r_2(t)$-$r_4(t)$) de la différence de deux signaux reçus correspondant respectivement aux fréquences $F_2$ et $F_4$.

2. Radar selon la revendication 1, **caractérisé en ce qu'**un signal de réception est démodulé de façon homodyne par rapport à l'oscillateur (42) utilisé pour l'émission, à la même fréquence.

3. Radar selon l'une quelconque des revendications 1 ou 2, **caractérisé en ce qu'**il est monopulse.

4. Radar selon l'une quelconque des revendications précédentes, **caractérisé en ce qu'**il comporte au moins :

- un oscillateur hyperfréquence (42) ;
- des moyens (41) de commande de modulation de l'oscillateur (42) aux fréquences $F_1$, $F_2$, $F_3$, $F_4$ ;
- une voie somme ($\Sigma$) de réception comportant des moyens (51, 52, 53, 55, 56; 57) pour réaliser le premier signal différence

$$\left(\Sigma_{r_1 - r_3}\right)$$

et le deuxième signal différence

$$\left(\Sigma_{r_2 - r_4}\right) \;;$$

- une voie différence ($\Delta$) de réception comportant des moyens (58, 60, 61 ) pour réaliser le premier signal différence

$$\left(\Delta_{r_1 - r_3}\right)$$

la mesure de distance étant obtenue par l'écart de phase entre les signaux différence

$$\left(\Sigma_{r_1 - r_3}, \Sigma_{r_2 - r_4}\right)$$

sur la voie somme et la mesure d'écartométrie étant réalisée par le rapport entre le premier signal différence

$$\left(\Sigma_{r_1-r_3}\right)$$

sur la voie somme (Σ) et le premier signal différence

$$\left(\Delta_{r_1-r_3}\right)$$

sur la voie différence (Δ).

**5.** Radar selon la revendication 4, **caractérisé en ce que** la voie de réception somme (Σ) comporte un premier mélangeur (47) ayant une entrée destinée au signal de réception et l'autre entrée reliée à la sortie de l'oscillateur hyperfréquence (42) et **en ce que** la voie différence (Δ) comporte un deuxième mélangeur (48) ayant une entrée destinée au signal de réception et l'autre entrée reliée à la sortie de l'oscillateur hyperfréquence (42).

**6.** Radar selon la revendication 5, **caractérisé en ce que** des amplificateurs (50, 59) sont connectés en sortie des mélangeurs (47, 48).

**7.** Radar selon l'une quelconque des revendications 4 à 6, **caractérisé en ce que** les moyens pour réaliser un signal différence

$$\left(\Sigma_{r_1-r_3}, \Sigma_{r_2-r_4}, \Delta_{r_1-r_3}\right),$$

comportent au moins un élément soustracteur (51, 55, 58) dont l'entrée positive est reliée à un interrupteur (52,56, 60) commandé à la fermeture durant la phase d'émission/réception à la fréquence ($F_1$, $F_2$) d'un premier signal ($r_1(t)$,$r_2(t)$) et dont l'entrée négative est reliée à un interrupteur (53, 57, 61) commandé à la fermeture durant la phase d'émission/récepteur à la fréquence ($F_3$, $F_4$) correspondant à un deuxième signal ($r_3(t)$,$r_4(t)$), l'élément soustracteur (51, 55, 58) réalisant la différence entre le premier et le deuxième signal.

**8.** Radar selon la revendication 7, **caractérisé en ce que** les signaux différence sont échantillonnés et codés par un convertisseur analogique numérique (54) pour être fourni à des moyens (49) de calcul de transformée de Fourier rapide (FFT), la différence de phase étant mesurée sur les spectres

$$\left(\bar{S}_{\Sigma_{r1-r3}}, \bar{S}_{\Sigma_{r2-r4}}\right)$$

des signaux différence déterminés par la transformée de Fourier.

**9.** Radar selon l'une quelconque des revendications 4 à 6, **caractérisé en ce que** les signaux sortant des mélangeurs (47, 48) sont échantillonnés et codés, les signaux différence

$$\left(\Sigma_{r_1-r_3}, \Sigma_{r_2-r_4}, \Delta_{r_1-r_3}\right)$$

étant définis numériquement puis fournis à des moyens (49) de calcul de transformée de Fourier rapide (FFT), la différence de phase étant mesurée sur les spectres

$$\left(\vec{S}_{\Sigma_{r1-r3}}, \vec{S}_{\Sigma_{r2-r4}}\right)$$

des signaux différence déterminés par la transformée de Fourier.

**10.** Radar selon l'une quelconque des revendications 1 ou 2, **caractérisé en ce qu'**il fonctionne avec une rampe de fréquence appliquée à une onde continue.

**11.** Radar selon l'une quelconque des revendications précédentes, **caractérisé en ce qu'**il fonctionne dans la bande de fréquence 76 - 77 GHz.

**12.** Radar selon l'une quelconque des revendications précédentes, **caractérisé en ce que** :

$F_1 - F_3$ et $F_2 - F_4$ sont sensiblement égales à 750 kHz,

$$\left(\frac{F_1 + F_3}{2}\right) - \left(\frac{F_2 + F_4}{2}\right)$$

est inférieure ou égale à 250 kHz.

**13.** Radar selon l'une quelconque des revendications précédentes, **caractérisé en ce que** $F_1$ est sensiblement égale à 76 GHz.

**14.** Radar selon l'une quelconque des revendications précédentes, **caractérisé en ce qu'**il émet successivement sur les quatre fréquences $F_1$, $F_2$, $F_3$, $F_4$, la réception s'effectuant pendant la durée du créneau d'émission.

**15.** Radar selon l'une quelconque des revendications 1 ou 2, **caractérisé en ce qu'**équipant un véhicule automobile, il détecte les obstacles précédant ce véhicule.

## Patentansprüche

**1.** Radargerät zur Erfassung eines Ziels, **dadurch gekennzeichnet, daß** es mindestens vier Frequenzen $F_1$, $F_2$, $F_3$, $F_4$ verwendet, für die gilt: $F_1 - F_3 = F_2 - F_4$
und $(F_1 + F_3) - (F_2 + F_4) = K$,
wobei K einen konstanten Frequenzwert bezeichnet, und daß die Abstandsmessung zum Ziel aufgrund der Phasendifferenz zwischen zwei Signalen erfolgt, von denen das erste $(r_1(t)-r_3(t))$ von der Differenz zweier Signale gebildet wird, die der Frequenz $F_1$ beziehungsweise $F_3$ entsprechen, während das zweite $(r_2(t)-r_4(t))$ von der Differenz zweier Signale gebildet wird, die der Frequenz $F_2$ beziehungsweise $F_4$ entsprechen.

**2.** Radargerät nach Anspruch 1, **dadurch gekennzeichnet, daß** ein Empfangssignal homodyn bezüglich des für die Aussendung bei der gleichen Frequenz verwendeten Oszillators (42) demoduliert wird.

**3.** Radargerät nach einem beliebigen der Ansprüche 1 und 2, **dadurch gekennzeichnet, daß** es ein Monopuls-Radargerät ist.

**4.** Radargerät nach einem beliebigen der vorstehenden Ansprüche, **dadurch gekennzeichnet, daß** es mindestens aufweist:

- einen Hochfrequenzoszillator (42),
- Mittel (41) zur Steuerung der Modulation des Oszillators (42) auf die Frequenzen $F_1$, $F_2$, $F_3$, $F_4$,
- einen Summen-Empfangskanal ($\Sigma$) mit Mitteln (51, 52, 53, 55, 56, 57) zur Bildung des ersten Differenzsignals ($\Sigma_{r1-r3}$) und des zweiten Differenzsignals ($\Sigma_{r2-r4}$),
- einen Differenz-Empfangskanal ($\Delta$) mit Mitteln (58, 60, 61) zur Bildung des ersten Differenzsignals ($\Delta_{r1-r3}$), wobei die Abstandsmessung durch den Phasenabstand zwischen den Differenzsignalen ($\Sigma_{r1-r3}$, $\Sigma_{r2-r4}$) auf dem Summenkanal erhalten wird, während der Meßwert der Winkelabweichung aus dem Verhältnis zwischen

dem ersten Differenzsignal ($\Sigma_{r1-r3}$) auf dem Summenkanal ($\Sigma$) und dem ersten Differenzsignal ($\Delta_{r1-r3}$) auf dem Differenzkanal ($\Delta$) errechnet wird.

5. Radargerät nach Anspruch 4, **dadurch gekennzeichnet, daß** der Summen-Empfangskanal ($\Sigma$) eine erste Mischstufe (47) besitzt, deren erster Eingang das Empfangssignal empfängt und deren zweiter Eingang an den Ausgang des Hochfrequenzoszillators (42) angeschlossen ist, und daß der Differenzkanal ($\Delta$) eine zweite Mischstufe (48) besitzt, deren erster Eingang das Empfangssignal empfängt und deren zweiter Eingang an den Ausgang des Hochfrequenzoszillators (42) angeschlossen ist.

6. Radargerät nach Anspruch 5, **dadurch gekennzeichnet, daß** Verstärker (50, 59) an den Ausgang der Mischstufen (47, 48) angeschlossen sind.

7. Radargerät nach einem beliebigen der Ansprüche 4 bis 6, **dadurch gekennzeichnet, daß** die Mittel zur Bildung eines Differenzsignals ($\Sigma_{r1-r3}$, $\Sigma_{r2-r4}$, $\Delta_{r1-r3}$) mindestens ein Subtraktionselement (51, 55, 58) aufweisen, dessen positiver Eingang an einen während der Empfangsphase bei der Frequenz ($F_1$, $F_2$) entsprechend einem ersten Signal ($r_1(t)$, $r_2(t)$) geschlossenen Schalter (52, 56, 60) angeschlossen ist, während der negative Eingang an einen während der Empfangsphase bei der Frequenz ($F_3$, $F_4$) entsprechend einem zweiten Signal ($r_3(t)$, $r_4(t)$) geschlossenen Schalter (53, 57, 61) angeschlossen ist und daß das Subtraktionselement (51, 55, 58) die Differenz zwischen dem ersten und dem zweiten Signal bildet.

8. Radargerät nach Anspruch 7, **dadurch gekennzeichnet, daß** die Differenzsignale von einem Analog/Digitalwandler (54) getastet, kodiert und dann an Mittel (49) zur Berechnung der schnellen Fourier-Transformierten (FFT) geliefert werden, wobei die Phasendifferenz an den Spektren ($\vec{S}_{\Sigma r1-r3}$, $\vec{S}_{\Sigma r2-r4}$) der Differenzsignale gemessen werden, die von der Fourier-Transformierten bestimmt werden.

9. Radargerät nach einem beliebigen der Ansprüche 4 bis 6, **dadurch gekennzeichnet, daß** die Ausgangssignale der Mischstufen (47, 48) getastet und kodiert werden, daß die Differenzsignale ($\Sigma_{r1-r3}$, $\Sigma_{r2-r4}$, $\Delta_{r1-r3}$) digital definiert und dann an Mittel (49) zur Berechnung der schnellen Fourier-Transformierten (FFT) geliefert werden, wobei die Phasendifferenz an den Spektren ($\vec{S}_{\Sigma r1-r3}$, $\bar{S}_{\Sigma r2-r4}$) der Differenzsignale gemessen werden, die von der Fourier-Transformierten bestimmt werden.

10. Radargerät nach einem beliebigen der Ansprüche 1 und 2, **dadurch gekennzeichnet, daß** es mit einer auf ein Dauerstrichsignal angewendeten Frequenzrampe arbeitet.

11. Radargerät nach einem beliebigen der vorstehenden Ansprüche, **dadurch gekennzeichnet, daß** es im Frequenzband zwischen 76 und 77 GHz arbeitet.

12. Radargerät nach einem beliebigen der vorstehenden Ansprüche, **dadurch gekennzeichnet, daß** die Differenzen $F_1$-$F_3$ und $F_2$-$F_4$ im wesentlichen 750 kHz betragen und daß die Differenz $(F_1+F_3)/2-(F_2+F_4)/2$ einen Wert kleiner oder gleich 250 kHz hat.

13. Radargerät nach einem beliebigen der vorstehenden Ansprüche, **dadurch gekennzeichnet, daß** die Frequenz $F_1$ im wesentlichen 76 GHz beträgt.

14. Radargerät nach einem beliebigen der vorstehenden Ansprüche, **dadurch gekennzeichnet, daß** es nacheinander auf den vier Frequenzen $F_1$, $F_2$, $F_3$, $F_4$ sendet und daß der Empfang während der Sendezeitfenster erfolgt.

15. Radargerät nach einem der Ansprüche 1 und 2, **dadurch gekennzeichnet, daß** es in ein Kraftfahrzeug eingebaut ist und Hindernisse vor dem Kraftfahrzeug erfaßt.

## Claims

1. Radar for detecting a target, **characterized in that** it uses at least four frequencies denoted $F_1$, $F_2$, $F_3$, $F_4$ such that:

$$F_1 - F_3 = F_2 - F_4$$

and
$(F_1 + F_3) - (F_2 + F_4)$ = Cons, where Cons represents a constant frequency value,
the target distance measurement being performed on the basis of the phase difference between two signals consisting for the first ($r_1(t)-r_3(t)$) of the difference of two signals received corresponding respectively to the frequencies $F_1$ and $F_3$, and for the second ($r_2(t)-r_4(t)$) of the difference of two signals received corresponding respectively to the frequencies $F_2$ and $F_4$.

**2.** Radar according to Claim 1, **characterized in that** a reception signal is demodulated in homodyne mode with respect to the oscillator (42) used for the transmission, at the same frequency.

**3.** Radar according to either of Claims 1 and 2, **characterized in that** it is a monopulse radar.

**4.** Radar according to any one of the preceding claims, **characterized in that** it comprises at least:

one microwave oscillator (42);
means (41) to control the modulation of the oscillator (42) at the frequencies $F_1$, $F_2$, $F_3$, $F_4$;
a reception sum channel (Σ) comprising means (51, 52, 53, 55, 56; 57) to obtain the first difference signal ($\Sigma_{r1-r3}$) and the second difference signal ($\Sigma_{r2-r4}$)
a reception difference channel (Δ) comprising means (58, 60, 61) to obtain the first difference signal ($\Delta_{r1-r3}$)
the measurement of distance being obtained by the phase difference between the difference signals ($\Sigma_{r1-r3}$ $\Sigma_{r2-r4}$) on the sum channel and the measurement of angular deviation being obtained by the ratio between the first difference signal ($\Sigma_{r1-r3}$) on the sum channel (Σ) and the first difference signal ($\Delta_{r1-r3}$) on the difference channel (Δ).

**5.** Radar according to Claim 4, **characterized in that** the sum reception channel (Σ) comprises a first mixer (47) having one input intended for the reception signal and the other input connected to the output of the microwave oscillator (42) and **in that** the difference channel (Δ) comrpises a second mixer (48) having one input intended for the reception signal and the other input connected to the output of the microwave oscillator (42).

**6.** Radar according to Claim 5, **characterized in that** amplifiers (50, 59) are connected to the output of the mixers (47, 48).

**7.** Radar according to any one of Claims 4 4 to 6, **characterized in that** the means for obtaining a difference signal ($\Sigma_{r1-r3}$ $\Sigma_{r2-r4}$ $\Delta_{r1-r3}$) comprise at least one subtractor element (51, 55, 58) whose positive input is connected to a switch (52, 56, 60) controlled so as to be closed during the transmission/reception phase at the frequency ($F_1$, $F_2$) of a first signal ($r_1(t)$,$r_2(t)$) and whose negative input is connected to a switch (53, 57, 61) controlled so as to be closed during the transmission/reception phase at the frequency ($F_3$, $F_4$) corresponding to a second signal ($r_3(t)$, $r_4(t)$), the subtractor element (51, 55, 58) taking the difference between the first signal and the second signal.

**8.** Radar according to Claim 7, **characterized in that** the difference signals are sampled and encoded by an analogue/digital converter (54) so as to be given to fast Fourier transform (FFT) computation means (49), the phase difference being measured on the spectra ($\vec{S}_{\Sigma r1-r3}$, $\vec{S}_{\Sigma r2-r4}$) of the difference signals determined by the Fourier transform.

**9.** Radar according to any one of Claims 4 to 6, **characterized in that** the signals output from the mixers (47, 48) are sampled and encoded, the difference signals ($\Sigma_{r1-r3}$, $\Sigma_{r2-r4}$, $\Delta_{r1-r3}$) being defined digitally and then given to fast Fourier transform (FFT) computation means (49), the phase difference being measured on the spectra ($\vec{S}_{\Sigma r1-r3}$, $\vec{S}_{\Sigma r2-r4}$) of the difference signals determined by the Fourier transform.

**10.** Radar according to either of Claims 1 and 2, **characterized in that** it functions with a frequency ramp applied to a continuous wave.

**11.** Radar according any one of the preceding claims, **characterized in that** it functions in the 76-77 GHz frequency band.

**12.** Radar according to any one of the preceding claims, **characterized in that**:

$F_1$-$F_3$ and $F_2$-$F_4$ are substantially equal to 750 kHz,

$$\left(\frac{F_1 + F_3}{2}\right) - \left(\frac{F_2 + F_4}{2}\right)$$

is lower than or equal to 250 kHz.

**13.** Radar according to any one of the preceding claims, **characterized in that** $F_1$ is substantially equal to 76 GHz.

**14.** Radar according to any one of the preceding claims, **characterized in that** it transmits successively on the four frequencies $F_1$, $F_2$, $F_3$, $F_4$, the reception taking place during the transmission square-wave pulse.

**15.** Radar according to either of Claims 1 and 2, **characterized in that**, being fitted into an automobile vehicle, it detects the obstacles preceding this vehicle.

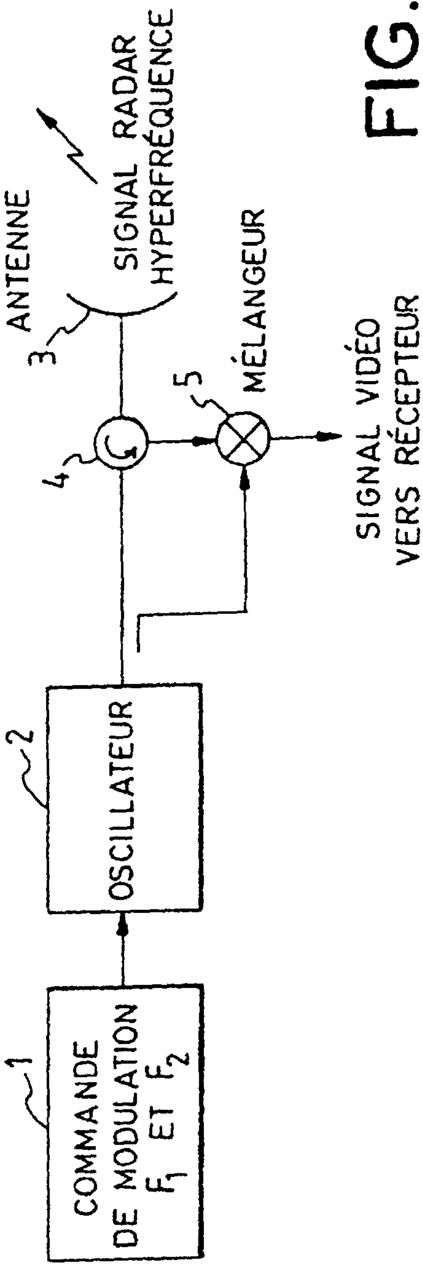

1
COMMANDE DE MODULATION $F_1$ ET $F_2$
2
OSCILLATEUR
3
ANTENNE
SIGNAL RADAR HYPERFRÉQUENCE
4
5
MÉLANGEUR
SIGNAL VIDÉO VERS RÉCEPTEUR


FIG.1

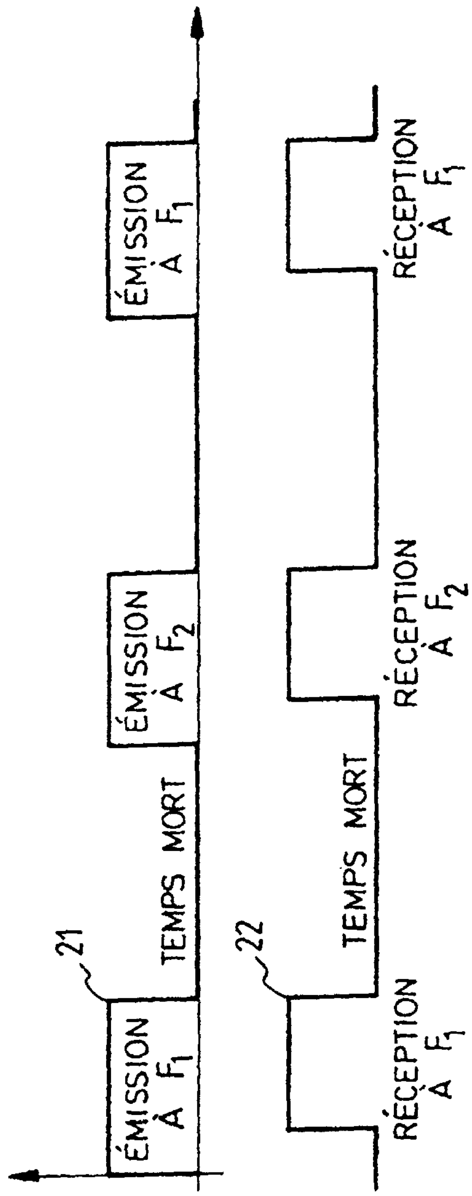

21
ÉMISSION À $F_1$
TEMPS MORT
ÉMISSION À $F_2$
ÉMISSION À $F_1$
22
RÉCEPTION À $F_1$
TEMPS MORT
RÉCEPTION À $F_2$
RÉCEPTION À $F_1$


FIG.2

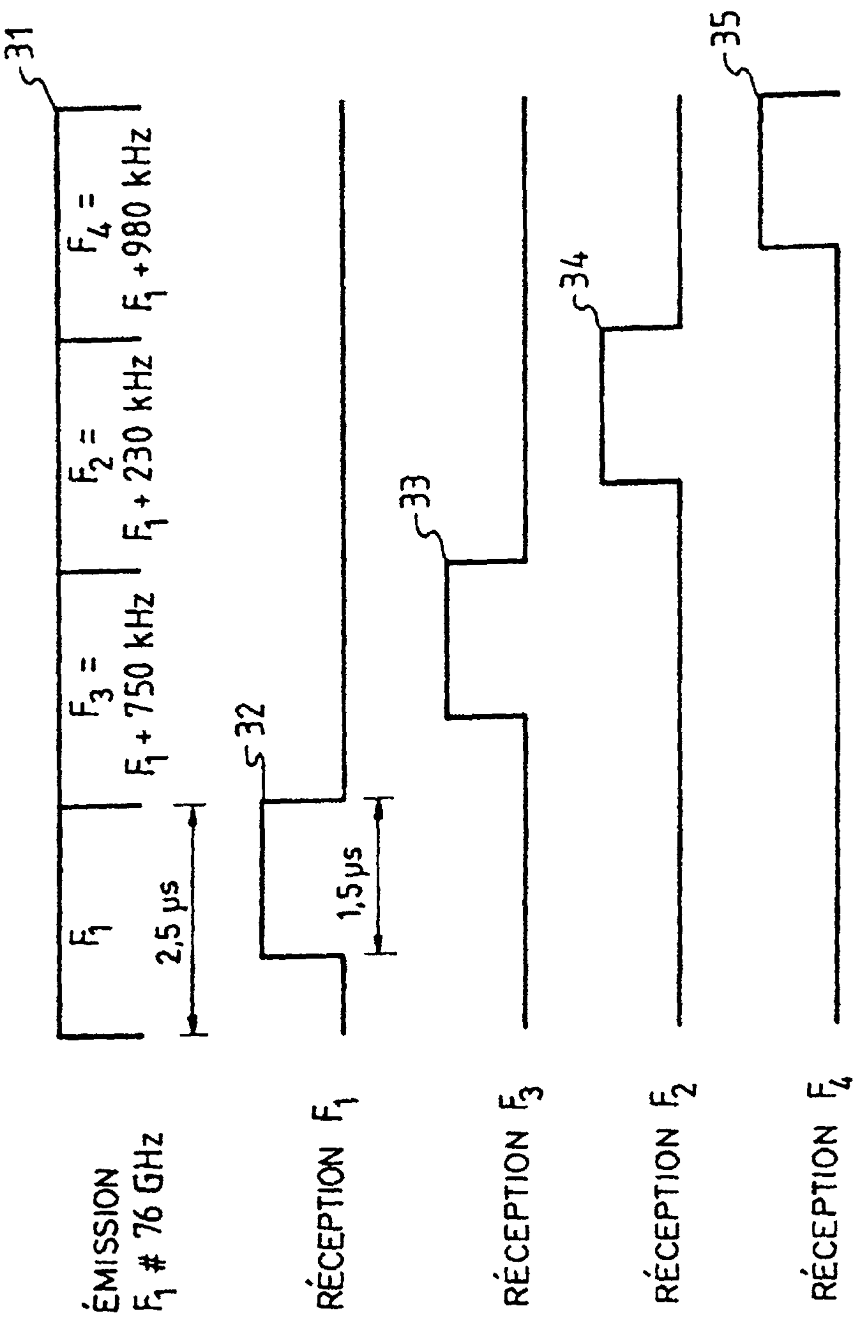

ÉMISSION
$F_1$ # 76 GHz
RÉCEPTION $F_1$
RÉCEPTION $F_3$
RÉCEPTION $F_2$
RÉCEPTION $F_4$
$F_1$
$F_3$ =
$F_1$ + 750 kHz
$F_2$ =
$F_1$ + 230 kHz
$F_4$ =
$F_1$ +980 kHz
2,5 µs
1,5µs
31
32
33
34
35


FIG.3

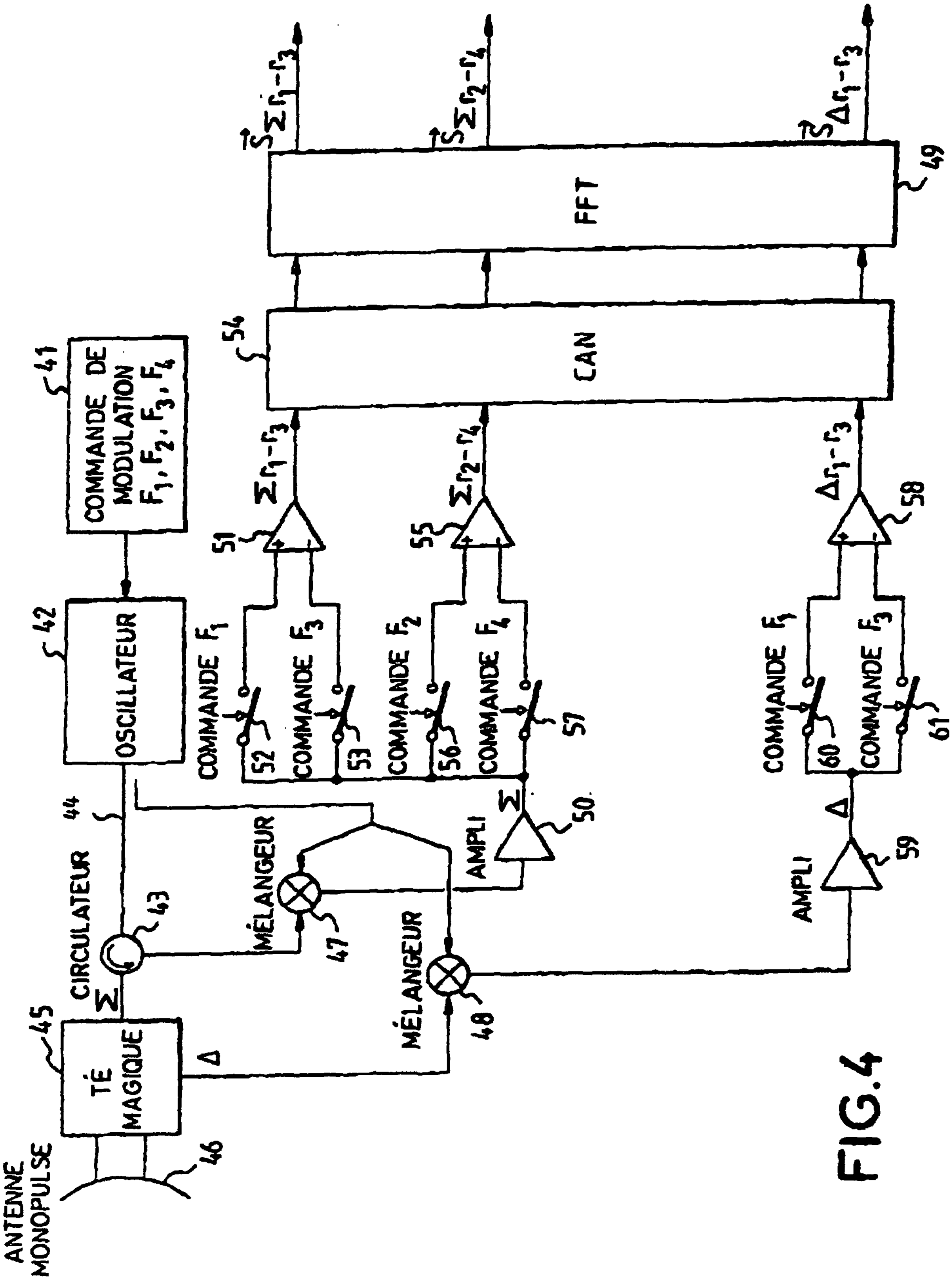
ANTENNE MONOPULSE
46
TÉ MAGIQUE
45
Σ
Δ
CIRCULATEUR
43
44
OSCILLATEUR
42
COMMANDE DE MODULATION F1, F2, F3, F4
41
MÉLANGEUR
47
MÉLANGEUR
48
AMPLI
50
AMPLI
59
COMMANDE F1
52
COMMANDE F3
53
COMMANDE F2
56
COMMANDE F4
57
COMMANDE F1
60
COMMANDE F3
61
51
55
58
CAN
54
FFT
49

FIG.4